# EUROPEAN PATENT APPLICATION

(11) **EP 0 794 109 A1**
(43) Date of publication of application: **10.09.1997**
(21) Application number: 97200640.7
(22) Date of filing: 04.03.1997
(51) Int. Cl.: B62D 51/00

(54) **Multifunction control handgrip, particularly for small self-propelled working machines**

(30) Priority: 08.03.1996 IT RE960008 U
(71) Applicant: LANDINI SpA, I-42042 Fabbrico (Emilia) (IT)
(72) Inventor: Benassi, Claudio, 42042 Fabbrico (Reggio Emilia) (IT)
(74) Representative: Corradini, Corrado

(57) **Abstract**

A multifunction control handgrip (5) for small self-propelled working machines (1) and the like, to be mounted on one end of the handlebar (4) of said machine or the like, and possessing, relative to said handlebar end, a facility to move in the axial direction and a facility to rotate, with which there are associated at least two wires (540, 550) for controlling a like number of machine functions, there being provided means for totally locking the handgrip relative to the handlebar, means for blocking only axial translation, and means for implementing said axial translation.

## Description

In small working machines with a single axle, such as engine-driven cultivators and the like, direction changes are induced by braking one or other of the drive wheels.

Braking is effected by the operator by operating one of the two brake levers, which are usually associated with the handgrips of the steering handlebar, but which In some cases are positioned in the centre of this latter.

If the machine is to be braked without provoking a steering action, for example if the brakes are to be applied for parking, or if only one wheel is to be halted, said levers are uncomfortable to operate because they are relatively distant from the operator.

To operate said levers the operator must therefore move slightly forward relative to the machine, to hence lie with his lower limbs in proximity to its rotary tool or implement, this often being a cause of possibly serious accidents. All this is accentuated by the fact that in such situations, ie when the implements, such as cutters, are in operation, the machine has poor steerability. In this respect, such implements induce vibration into the handlebar which the operator must obviously oppose with only one hand.

Moreover, as the accelerator lever is also located in proximity to one of the handlebar handgrips, the operator sometimes finds himself required to operate two controls with one hand, this also giving rise to false and dangerous manoeuvres.

The object of the present patent is to provide a multifunction control, applicable for example to the brakes of small single-axle working machines and like means, such as agricultural engine-driven cultivators, by which the operator is not required to remove his hands from the two ends of the handlebar as he is able to perform all the control operations without him being obliged to dangerously approach the rotary implement of the machine.

Said object is attained according to the invention by a handgrip control possessing a facility to move in the axial direction and a facility to rotate, with which there are associated at least two wires for controlling a like number of machine functions.

According to the invention, with said handgrip there are also associated means easily operable even simultaneously with one hand, and arranged to facilitate its translation, and to block one or both said movement facilities.

The merits and constructional characteristics of the invention will be more apparent from the detailed description thereof given hereinafter, with reference to the figures of the accompanying drawings, in which:
Figure 1 is a schematic view of an engine-driven cultivator;
Figure 2 is a schematic view of the invention;
Figure 3 is a perspective view of the invention;
Figure 4 is an axial section through the invention;
Figure 5 is a section on the line V-V of Figure 4;
Figure 6 is a view totally similar to that of Figure 3, showing a modification of the lever provided for sliding the handgrip; and
Figure 7 is a partial side elevation of Figure 6.

Said figures show the engine-driven cultivator 1 provided with two drive wheels 2 and 3, and the handlebar 4, on one branch of which there is mounted the handgrip 5 according to the invention.

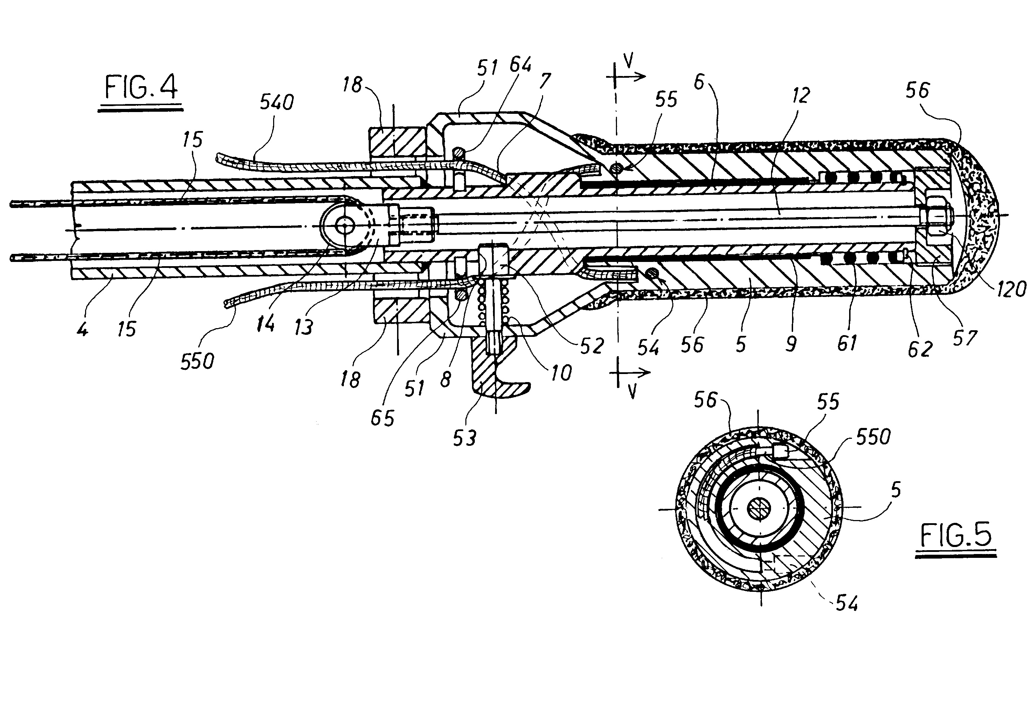

To the end of one of the branches of the handlebar there is fixed a shaped tubular body 6 (see Figure 4) provided with an annular shoulder 7 and a hole 8.

The handgrip 5 is mounted on the body 6 with a sleeve 9 of low friction coefficient therebetween.

The handgrip 5 can therefore slide axially and rotate relative to the body 6.

The handgrip is covered with an elastomer covering.

It is maintained mounted on the body 6 by a compressed spring 61 compressed between a shoulder on the handgrip and a snap ring 62 fixed to the end of the body 6.

The handgrip 5 comprises a widened region 51 within which there is radially guided a pin 52 which normally rests against the annular shoulder 7, and when in correspondence with the hole 8 it enters this hole by the action of the thrust spring indicated by 10.

The pin 52 extends to the outside, where it carries a small profiled button 53 by which the operator can easily raise the pin, against the action of the spring 10, using the tip of the thumb.

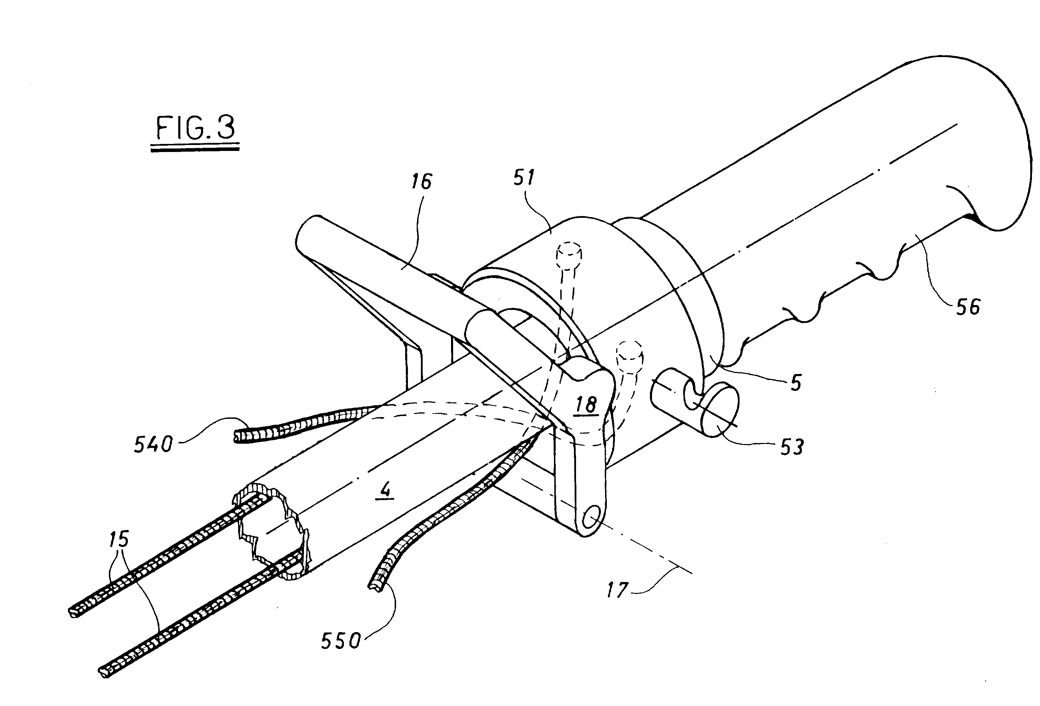

The body 6 comprises two sheath-carrying slots 64 and 65 respectively (see Figures 3 and 4), located in diametrically opposite projecting positions to the front of the pin 52.

In proximity to the diametrical plane containing the axis of the pin 52 and to the rear of this latter, the handgrip 5 comprises, situated in two different axial positions (see Figure 4), two seats 54 and 55 arranged to receive the ends of two wires indicated by 540 and 550 respectively. Said wires 540 and 550 are covered, practically as far as the mouth of the respective sheath, with an anti-friction and anti-wear jacket which enables them to move mutually without problems of seizure at the points in which they cross.

In this respect, as can be seen in Figures 3, 4 and 6, the wire 550 leading to the seat 55 extends helically through slightly less than 180° about the profiled body 6 before being deviated by the respective slot 65.

Likewise the wire 540 leading to the seat 54, before being deviated by the respective slot 64, extends in the opposite direction to the preceding about said profiled body 6, on that side of this latter where the wire 550 is situated.

It should be noted that the mouths of the holes provided on the slots 64 and 65 are conveniently chamfered to allow optimum sliding of the respective jackets, while at the same time ensuring that the helical pattern of the wires 540 and 550 is maintained during the sliding and rotation of the handgrip 5.

To the free end of this latter there is screwed a ring 57 to the centre of which there is connected a rod 12 inserted through the body 6 in a substantially axial position. The rod 12 carries at its opposite end a fork 13 supporting an idle pulley 14 about which a cable 15 passes.

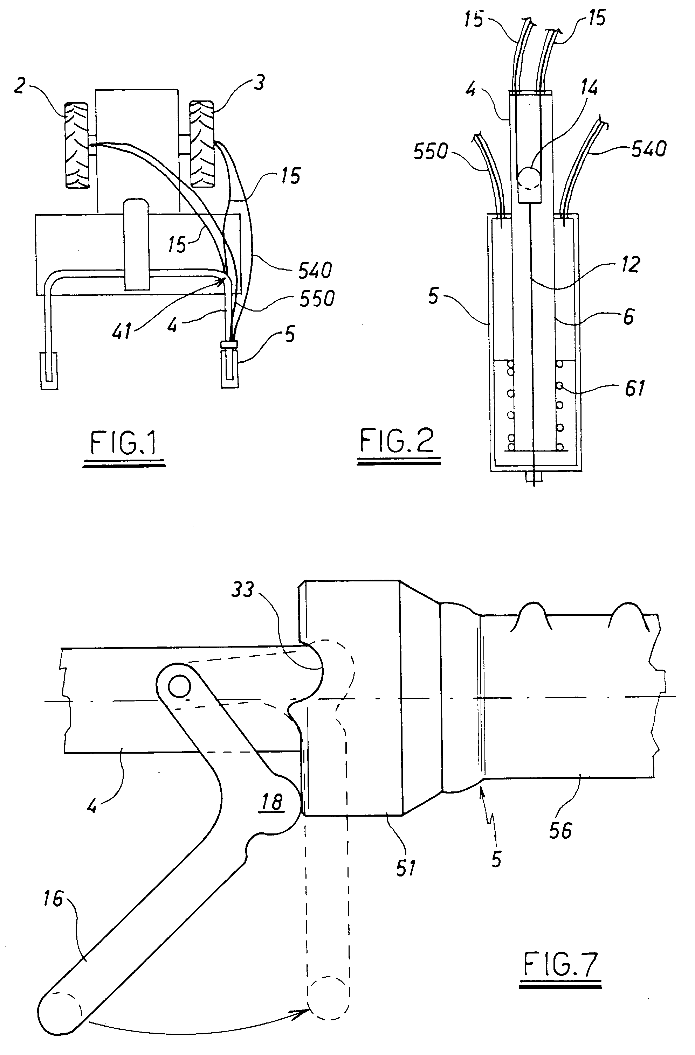

As can be seen in Figure 1, the wire 540 and one end of the cable 15 are connected to the brake of the right wheel 3, whereas the wire 550 and the other end of the cable 15 are connected to the left wheel 2.

The wires 540 and 550 are sheathed between the handgrip 5 and the respective brakes, the two ends of the cable 15 being sheathed between the bend 41 of the handlebar 4 and the respective brakes.

It should also be noted that beyond said ring 57 the rod 12 comprises at least one nut 120 the purpose of which is to enable the tension in the cable 15 to be adjusted with simultaneous take-up of slack.

In front of the handgrip 5 there is provided a lever 16, in the form of a rectangular frame, which is hinged to the handlebar 4 on the axis 17, and comprises two protuberances 18 arranged to make contact, in diametrically opposite positions, with the front edge of the handgrip 5.

By acting with one finger on the end of the lever 16, the operator can retract the handgrip.

The invention operates as follows.

During straight-line travel of the engine-driven cultivator the pin 52 is inserted into the hole 8 and the handgrip is locked.

To turn to the right or left, the operator raises with his thumb the pin 52 until it leaves the hole 8, but without causing it to pass over the annular shoulder 7, the handgrip then being able to rotate about itself in both said directions, but not slide axially because this is prevented at one end by said shoulder 7 and at the other end by the ring 57. By virtue of said bilateral retention, the operator is able to push or pull the handgrip 5 to steer the machine.

When the machine is to be braked until it stops, the operator uses his thumb to completely raise the pin 52 to enable it to pass over the shoulder 7, then operating the lever 16 with his index finger he retracts the handgrip 5, by which the machine stops.

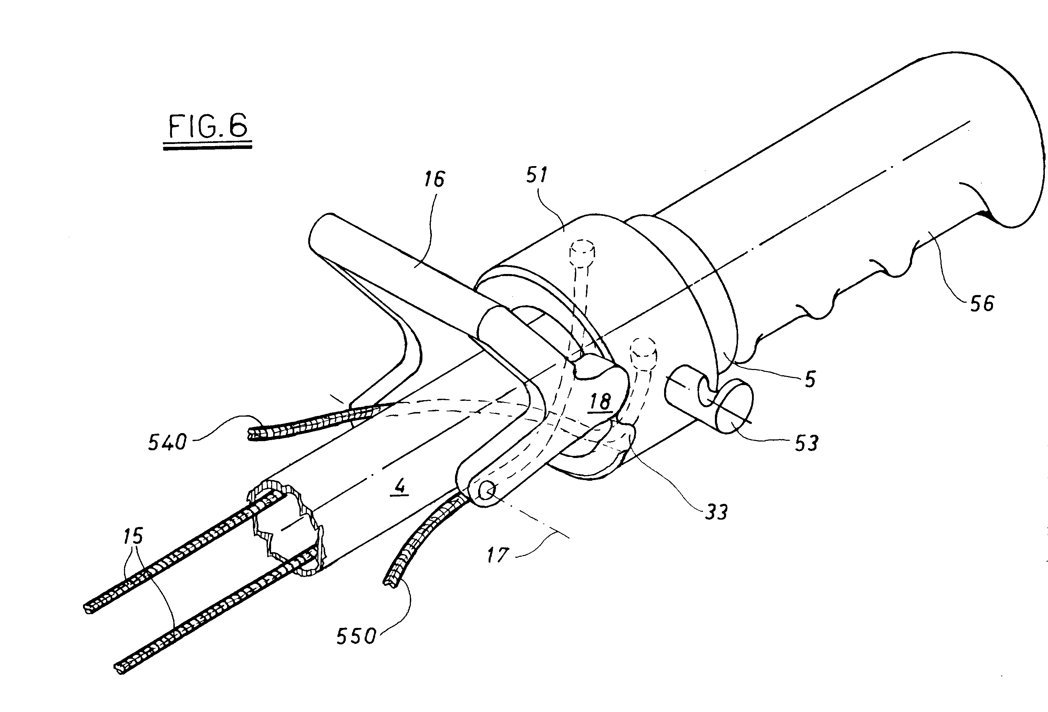

With reference to the modified embodiment of Figures 6 and 7, it can be seen that on the front annular edge of the handgrip 5 there are provided two recesses 33 of shape conjugate to the protuberances 18 on the lever 16. Specifically, said recesses 33 are positioned below the axis 17 on which the lever 16 is hinged, so that when said protuberances 18 are engaged with said recesses 33 the lever 16 occupies a stable position representing the machine parking position.

## Claims

1. A multifunction control handgrip (5) for small self-propelled working machines (1) and the like, to be mounted on one end of the handlebar (4) of said machine or the like,
characterised by possessing, relative to said handlebar end, a facility to move in the axial direction and a facility to rotate, with which there are associated at least two wires (540, 550) for controlling a like number of machine functions, there being provided means for totally locking the handgrip relative to the handlebar, means for blocking only axial translation, and means for implementing said axial translation.

2. A handgrip as claimed in claim 1, characterised in that there is tangentially fixed to the handgrip the end of a first control wire (540) which extends as a spiral about said handlebar end through an angle of slightly less than 180°, with the cooperation of a guide and slider element (64).

3. A handgrip as claimed in claim 2, characterised in that in a position close to that in which the first control wire is fixed, a second control wire (550) is tangentially fixed to the handgrip and extends as a spiral through an angle of slightly less than 180°, in the opposite direction to that in which said first wire (540) extends, about said handlebar end with the cooperation of a respective guide and slider element (65).

4. A handgrip as claimed in claims 2 and 3, characterised in that the spirally extending portions of said first (540) and second (550) control wire are situated on the same side of the handlebar end, and are individually received within a respective anti-friction and anti-wear jacket.

5. A handgrip as claimed in claims 2 to 4, characterised in that the ends of said first (540) and second (550) control wire are coupled to the handgrip (5) such that a right-hand rotation of this latter controls a member situated on the right side of the respective machine, such as the brake of the right wheel (3) of this latter, and a left-hand rotation thereof controls a member situated on the left side, such as the brake of the left wheel (2).

6. A handgrip as claimed in claim 1, characterised by carrying a fixed axial rod (12) which is inserted into the end of the handlebar, and is connected to a control wire (15) different from the preceding.

7. A handgrip as claimed in claim 6, characterised in that said control wire (15) consists of a double cable fixed to the end of the rod (12) via an idle pulley (14), said two component cables being connected to two separate members of the machine, such as the wheels of this latter.

8. A handgrip as claimed in claims 6 and 7, characterised in that between said handgrip (5) and said rod (12) there are interposed means for adjusting the tension in said cable (15), such as a nut (120) screwed onto said rod (12).

9. A handgrip as claimed in claim 1, characterised in that the means for locking the handgrip to the end of the handlebar consist of a radial pin (52) slidingly guided through the handgrip, it comprising a spring (10) which maintains it pressed against the end of the handlebar and being arranged to enter a hole (8) therein and to rest against an annular shoulder (7) on the handlebar to prevent rotation and axial sliding of the handgrip respectively, said pin being caused by means of a knob (53) external to the handgrip to rise so as leave said hole, and to further rise so as to pass over said annular shoulder.

10. A handgrip as claimed in claim 9, characterised in that said knob is shaped as a hook, to be operated by the end of the thumb of the operator who grips the handgrip.

11. A handgrip as claimed in claim 1, characterised in that the means for causing the handgrip to axially translate comprise a rectangular frame-type lever (16) which receives the end of the handlebar and is hinged to this latter, its two parallel sides lying perpendicular to the hinging axis of the lever resting against the front edge of the handgrip.

12. A handgrip as claimed in claim 11, characterised in that said two parallel sides each comprise a protuberance (18) which rests against the edge of the handgrip.

13. A handgrip as claimed in claim 12, characterised in that in said front edge of the handgrip there are provided two recesses (33) of shape conjugate to said protuberances, and arranged to retain said frame ion a stable operating position.

14. A handgrip as claimed in claim 1, characterised in that anti-friction means (9) are interposed between said handgrip and said handlebar end.
